**Europäisches Patentamt**

**European Patent Office**

**Office européen des brevets**

(11) Numéro de publication: **0 107 547**
**A1**

# (12) DEMANDE DE BREVET EUROPEEN

(21) Numéro de dépôt: **83401890.5**

(22) Date de dépôt: **27.09.83**

(51) Int. Cl.³: **H 04 Q 11/04**

---

(30) Priorité: **05.10.82 FR 8216682**

(43) Date de publication de la demande: **02.05.84**
**Bulletin 84/18**

(84) Etats contractants désignés: **DE GB IT SE**

(71) Demandeur: **THOMSON-CSF TELEPHONE,**
**146, Boulevard de Valmy, F-92707 Colombes (FR)**

(72) Inventeur: **Lecomte, Daniel, THOMSON-CSF**
**SCPI 173, bld Haussmann, F-75379 Paris Cedex 08 (FR)**
Inventeur: **Gibaud, Michel, THOMSON-CSF SCPI 173, bld**
**Haussmann, F-75379 Paris Cedex 08 (FR)**

(74) Mandataire: **Chaverneff, Vladimir et al, THOMSON-CSF**
**SCPI 173, Bld Haussmann, F-75379 Paris Cedex 08 (FR)**

---

(54) **Autocommutateur électronique temporel numérique MIC à capacité modulable.**

(57) L'autocommutateur de l'invention comporte un calculateur (2) et plusieurs cartes de terminaison (23). Le calculateur
est relié par l'intermédiaire d'un circuit de sélection de terminaisons (11) aux entrées de sélection des ensembles de terminaisons. Les sorties et entrées de données des terminaisons sont
reliées par une jonction bidirectionnelle (29) et un réseau de
connexion (8) au calculateur.
Application: téléphonie privée.

1

# AUTOCOMMUTATEUR ELECTRONIQUE TEMPOREL
## NUMERIQUE MIC A CAPACITE MODULABLE

La présente invention se rapporte à un autocommutateur électronique temporel numérique MIC à capacité modulable.

Généralement, un autocommutateur temporel est constitué d'un ensemble de terminaisons, telles qu'équipements de lignes d'abonnés, joncteurs réseau, etc... Ces terminaisons sont reliées à deux bus de réception et d'émission de signaux, respectivement. Il est alors nécessaire d'utiliser un réseau de connexion pour aiguiller à des instants précis les données du bus émission vers le bus réception, et permettre ainsi une conversation bidirectionnelle entre deux terminaisons.

La présente invention a pour objet un autocommutateur temporel numérique MIC de faible capacité mais dont les équipements de terminaisons peuvent être utilisés dans des autocommutateurs temporels numériques MIC de plus grande capacité.

L'autocommutateur conforme à l'invention comporte un calculateur ou unité centrale de traitement relié par l'intermédiaire d'un circuit de sélection aux entrées de sélection d'un ou plusieurs ensembles de plusieurs terminaisons, lesdits circuits de sélection étant également reliés à un compteur d'intervalle de temps, toutes les terminaisons étant reliées à un système de deux jonctions MIC d'échange de données, ces deux jonctions étant elles-mêmes reliées entre elles par un réseau de connexion.

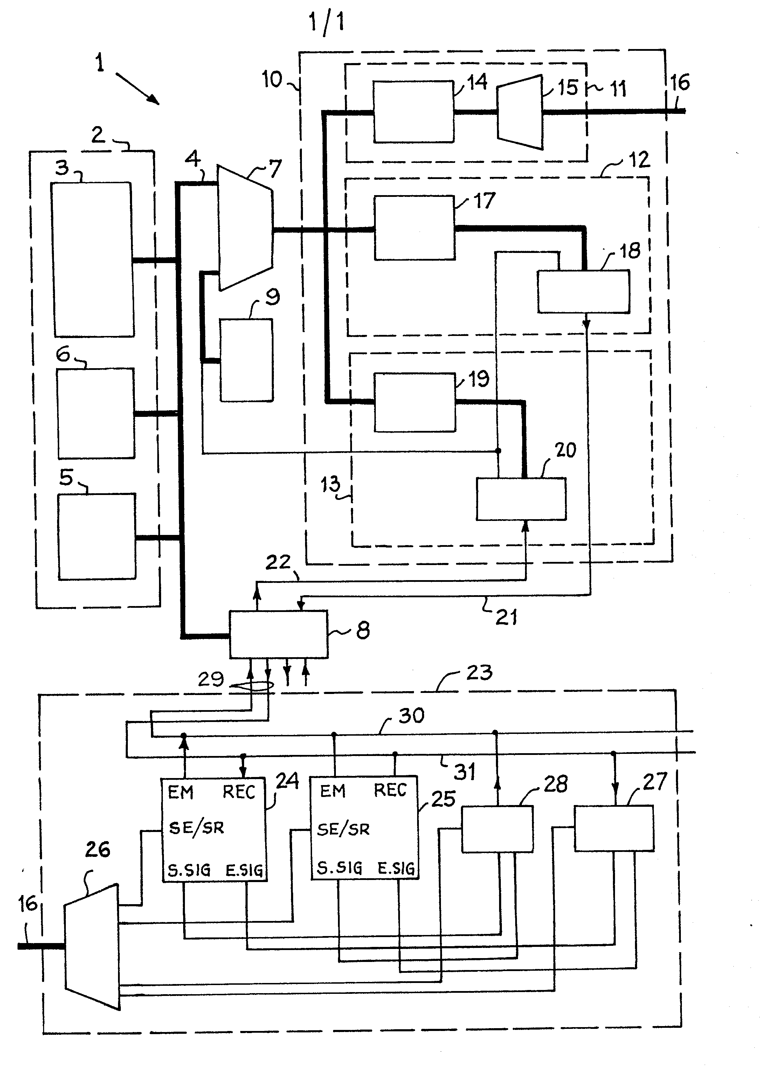

La présente invention sera mieux comprise à la lecture de la description détaillée d'un mode de réalisation pris comme exemple non limitatif et illustré par le dessin annexé dont la figure unique est un bloc diagramme d'un autocommutateur conforme à l'invention.

L'autocommutateur 1 représenté schématiquement sur le dessin est un autocommutateur privé de faible capacité, par exemple de quelques dizaines à une centaine de postes. L'autocommutateur 1 comporte un calculateur 2 comprenant essentiellement un microprocesseur 3 relié par un bus 4, à une mémoire 5 contenant les divers programmes téléphoniques et les programmes de signalisation et d'exploration des terminaisons, et à une mémoire 6 non volatile servant à sauvegarder certaines données de fonctions propres aux services téléphoniques (par exemple : numéros abrégés, rappels automatiques, etc . . .).

Le bus 4 est relié à une entrée d'un multiplexeur 7 à deux entrées et à un réseau de connexion temporel 8. L'autre entrée du multiplexeur 7 est reliée à un compteur 9 d'intervalles de temps. La sortie du multiplexeur 7 est reliée à l'entrée d'un circuit 10 de sélection des terminaisons. Le circuit 10 se compose d'un circuit 11 de sélection d'instants d'émission et de réception, d'un circuit 12 de transmission de signalisation à destination des terminaisons, et d'un circuit 13 de traitement de signalisation en provenance des terminaisons. Les entrées des circuits 11, 12 et 13 sont toutes reliées à la sortie du multiplexeur 7.

Le circuit 11 comprend une mémoire 14 comportant, pour chaque intervalle de temps de l'autocommutateur, l'adresse de la carte et de la terminaison à sélectionner. La mémoire 14 est suivie d'un démultiplexeur primaire 15 de sélection de carte dont la sortie est reliée à un bus 16. Le circuit 12 comprend une mémoire 17 comportant, pour chaque intervalle de temps, les données correspondant à la signalisation à transmettre à la terminaison dont l'adresse se trouve dans la mémoire 14. La mémoire 17 est suivie d'un registre 18 à entrées parallèles et sortie série dont la sortie est reliée à une jonction MIC 21 elle-même reliée à une entrée du réseau de connexion 8. Le circuit 13 comprend une mémoire 19 comportant, pour chaque intervalle de temps, les données correspondant à la signalisation en provenance de la terminaison dont l'adresse se trouve dans la mémoire 14. La mémoire 19 est précédée d'un registre 20 à entrée série et sorties parallèles, dont l'entrée est reliée à une jonction MIC 22 elle-même reliée à une sortie du réseau de connexion 8.

On relie au bus 16 plusieurs, par exemple seize, cartes de terminaisons telles que la carte 23, seule représentée sur le dessin dans un but de simplification. Chaque carte de terminaisons comprend plusieurs, par exemple quatre, huit ou seize, terminaisons. Sur le dessin, on a représenté pour la carte 23 seulement deux terminaisons, à savoir les terminaisons référencées 24 et 25. Ces terminaisons sont des équipements de lignes d'abonnés, de joncteurs réseau, etc . . . Chaque carte telle que la carte 23 comporte en outre un démultiplexeur secondaire 26. L'entrée du démultiplexeur 26 est reliée au bus 16, et ses différentes sorties sont reliées chacune à une entrée SE/SR de sélection de terminaison ou à une entrée de validation d'un registre 27 de réception de signalisation ou d'un registre 28 d'émission de signalisation. Chaque terminaison comporte une entrée de signalisation E.SIG pour recevoir la signalisation en provenance du calculateur 2, et une sortie de signalisation S.SIG pour envoyer de la signalisation au calculateur 2. Chaque entrée de signalisation E.SIG est reliée à la sortie parallèle du registre 27 dont l'entrée série est reliée à une jonction MIC bidirectionnelle 29 elle-même reliée au réseau de connexion 8. Chaque sortie de signalisation S.SIG est reliée à l'entrée parallèle du registre 28 dont la sortie est reliée à la jonction 29. Chaque terminaison comporte en outre une sortie EM d'émission de données et une entrée REC de réception de données.

Les sorties EM de toutes les terminaisons sont reliées au fil d'émission (vers le réseau de connexion 8) 30 de la jonction 29, et les entrées REC de toutes les terminaisons sont reliées au fil réception 31 de la jonction 29.

Lorsqu'un demandeur (poste téléphonique ou réseau) relié à l'une des terminaisons de l'autocommutateur 1 veut établir une liaison avec un demandé (un autre poste téléphonique ou un autre réseau) relié à une autre terminaison, il envoie, par exemple par fermeture de boucle, une signalisation correspondante par la sortie S.SIG de sa terminaison au calculateur 2 via le registre 28 correspondant, et via le réseau 8, le registre 20 et la mémoire 19. Le calculateur 2 envoie une signalisation d'appel à l'entrée E.SIG de la terminaison du demandé via la mémoire de signalisation 17, le registre 11, le réseau de connexion 8, et via le registre 27 correspondant. Dès que le demandé a fait savoir au calculateur 2 par une signalisation de retour qu'il est prêt à recevoir le demandeur, le calculateur 2 sélectionne les instants d'émission des informations MIC échangées entre le demandeur et le demandé, ces instants correspondant à des intervalles de temps de la jonction 29 comme expliqué ci-dessous. La sélection des instants d'émission et de réception se fait par activation de l'entrée SE/SR de la terminaison devant émettre et recevoir pendant les intervalles de temps choisis. Cette activation se fait de la manière suivante. Le calculateur 2, ayant choisi un intervalle de temps de la jonction 29, écrit dans la mémoire 14, à l'adresse correspondant à cet intervalle de temps, l'adresse de la terminaison qui devra émettre ses données pendant cet intervalle de temps, et recevoir les données présentes sur le fil de jonction 31 pendant ce même intervalle de temps. La mémoire 14 délivre alors l'adresse de la terminaison sélectionnée, cette adresse étant validée par le compteur 9 d'intervalles de temps qui valide aussi sur le même intervalle de temps de la jonction 29 les informations relatives à la terminaison sélectionnée. Bien entendu, le multiplexeur 7 fonctionne en synchronisme avec l'horloge centrale (non représentée) de l'autocommutateur 1 de façon à laisser passer alternativement les informations émises par le calculateur 2 sur le bus 4 et les informations venant du compteur 9.

L'adresse de la terminaison sélectionnée comprend la sous-adresse de la carte dans laquelle se trouve cette terminaison, et la sous-adresse de la terminaison en question à l'intérieur de cette carte. La première sous-adresse est traitée par le démultiplexeur 15, et la seconde par le démultiplexeur 26 de la carte en question. L'adresse de la terminaison sélectionnée comprend également une information du type "données MIC" ou "signalisation" afin d'indiquer au démultiplexeur 26 qu'il s'agit de sélectionner soit les entrées ou sorties de données REC-EM, soit les entrées et sorties de signalisation E.SIG, S.SIG à travers les registres 27 et 28.

Pour établir une conversation (ou échange de données de façon plus générale) bidirectionnelle entre deux terminaisons, par exemple les terminaisons 24 et 25, il faut utiliser deux intervalles de temps de la jonction 29. Le premier intervalle de temps est sélectionné pour la terminaison 24, et le second pour la terminaison 25. La sortie EM de la terminaison 24 émet ses données sur ledit premier intervalle de temps, sur le fil de jonction 30, et ces données sont transmises par le fil de jonction 31 pendant le deuxième intervalle de temps, grâce au réseau de connexion 8 qui met en relation le premier intervalle de temps du fil de jonction 30 avec le deuxième intervalle de temps du fil de jonction 31. De même, la sortie EM de la terminaison 25 émet ses données sur ledit deuxième

5

intervalle de temps du fil de jonction 30, ces données étant transmises par le fil de jonction 31 pendant le premier intervalle de temps grâce au réseau de connexion 8 qui met en relation le deuxième intervalle de temps du fil de jonction 31 avec le premier intervalle de temps du fil de jonction 30.

Il est possible d'augmenter la capacité de l'autocommutateur en augmentant le nombre de jonctions MIC reliées au réseau de connexion 8. Si l'on utilise par exemple deux jonctions MIC 29, la capacité de l'autocommutateur est alors portée à environ 30 réseaux et 128 postes avec un trafic de 0,17 Erlang par poste.

6

REVENDICATIONS

1. Autocommutateur électronique temporel numérique MIC comportant un calculateur (2) et des terminaisons (24, 25) telles qu'équipements de lignes d'abonnés, joncteurs réseau, etc . . ., caractérisé par le fait que le calculateur est relié par l'intermédiaire d'un circuit de sélection de terminaisons (11) aux entrées de sélection d'un ou de plusieurs ensembles (23) de plusieurs terminaisons (24, 25), lesdits circuits de sélection étant également reliés à un compteur d'intervalle de temps (9), toutes les terminaisons étant reliées à un réseau de connexion (8) par l'intermédiaire d'une jonction MIC de transmission de données.

2. Autocommutateur selon la revendication 1, caractérisé par le fait que la jonction MIC est une jonction bidirectionnelle reliée d'une part à toutes les entrées de réception de données (REC), et d'autre part à toutes les sorties d'émission de données (EM) de toutes les terminaisons.

3. Autocommutateur selon l'une quelconque des revendications précédentes, caractérisé par le fait que le circuit de sélection des terminaisons comporte une mémoire (14) comprenant, pour chaque intervalle de temps l'adresse de la terminaison à sélectionner, cette mémoire étant suivie d'un démultiplexeur primaire (15) dont la sortie est reliée à un bus (16) auquel sont reliés tous les ensembles de plusieurs terminaisons.

4. Autocommutateur selon la revendication 3, caractérisé par le fait que chaque ensemble de plusieurs terminaisons comporte un démultiplexeur secondaire (26) de sélection de terminaison.

5. Autocommutateur selon l'une quelconque des revendications précédentes, caractérisé par le fait que le calculateur (2) est relié par une mémoire d'émission de signalisation (17) et une mémoire de réception de signalisation (19) aux entrées et sorties de signalisation de chaque terminaison via le réseau de connexion (8) et à chaque fois via un registre (27, 28).

0107547

1/1

**Office européen
des brevets**

**RAPPORT DE RECHERCHE EUROPEENNE**

EP 83 40 1890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|-----------|----------------------------------------------------------------------------------|------------------------|----------------------------------------|
| A | FR-A-2 459 598 (L.M.T.-S.T.E.) <br> * Page 2, lignes 12-28; page 3, ligne 26 - page 4, ligne 14; page 9, lignes 9-27 * | 1-3 | H 04 Q 11/04 |
| | --- | | |
| A | EP-A-0 006 132 (SIEMENS) <br> * Page 1, ligne 9 - page 3, ligne 4; page 5, ligne 9 - page 6, ligne 20; page 7, ligne 23 - page 8, ligne 14 * | 1 | |
| | ----- | | |

DOMAINES TECHNIQUES
RECHERCHES (Int. Cl. ³)

H 04 Q

Le présent rapport de recherche a été établi pour toutes les revendications

| Lieu de la recherche <br> LA HAYE | Date d'achèvement de la recherche <br> 09-01-1984 | Examinateur <br> GERLING J.C.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO Form 1503 03.82